# EUROPÄISCHE PATENTSCHRIFT

(11) **EP 2 474 767 B1**
(45) Veröffentlichungstag und Bekanntmachung des Hinweises auf die Patenterteilung: **20.03.2013**
(21) Anmeldenummer: 11194203.3
(22) Anmeldetag: 19.12.2011
(51) Int. Cl.: F16L 13/08

(54) **Verbindungselement für eine Leitungsanordnung**
Connection element for a pipe assembly
Elément de liaison pour un agencement de conduite

(30) Priorität: 05.01.2011 DE 202011001158 U
(43) Veröffentlichungstag der Anmeldung: 11.07.2012
(73) Patentinhaber: VERITAS AG, 63571 Gelnhausen (DE); Veritas Austria GmbH, 6142 Mieders (AT)
(72) Erfinder: Hattaß, Dirk, 63584 Gründau (DE); Mohr, Jörg, 63505 Langenselbold (DE); Suitner, Friedrich, 6166 Fulpmes (AT)
(74) Vertreter: Witte, Weller & Partner

(56) Entgegenhaltungen:
- DE-A1-102007 051 109
- DE-U1- 7 623 278

## Beschreibung

Die vorliegende Erfindung betrifft ein Verbindungselement für eine Leitungsanordnung, mit einem Grundkörper, der wenigstens einen Verbindungsabschnitt aufweist, wobei der Verbindungsabschnitt eine Funktionsfläche aufweist und wobei ein Anschlusselement mittels einer Lötverbindung mit dem Grundkörper verbunden ist.

Derartige Verbindungselemente sind allgemein bekannt. Die Leitungsanordnung kann hierbei eine Rohr- oder eine Schlauchleitungsanordnung sein. Das Verbindungselement kann insbesondere als Nippel ausgebildet sein, auf dem ein Rohr oder ein Schlauch aufgeschoben wird. Das Verbindungselement kann jedoch auch nach der Art einer Muffe ausgebildet sein, in die ein Rohr oder ein Schlauch eingesteckt wird. Die Leitungsanordnung dient insbesondere zum Führen von Fluiden, insbesondere auf dem Gebiet der KFZ-Technik. Hier sind derartige Leistungsanordnungen zum Führen von Fluiden wie Öl, Bremsflüssigkeit, etc. oder zum Führen von gasförmigen Medien wie komprimierte Luft (Turbolader) bekannt.

Das Verbindungselement ist bei dieser Art von Leitungsanordnungen vorzugsweise als Drehteil ausgebildet. Die Funktionsflächen können beispielsweise Dichtflächen oder Führungsflächen sein. In die Funktionsflächen können zum Abdichten ferner O-Ringe oder dergleichen integriert sein.

Bei derartigen Verbindungselementen ist es bekannt, den Grundkörper mit einem Anschlusselement zu verbinden. Das Anschlusselement kann beispielsweise ein Halter sein, der zur Befestigung des Verbindungselementes an einer Karosserie oder dergleichen ausgelegt ist. Das Anschlusselement kann jedoch auch ein Rohrabschnitt sein.

Insbesondere dann, wenn ein derartiges Anschlusselement mittels einer Lötverbindung in der Nähe einer Funktionsfläche festgelegt wird, kann es durch überschüssiges Lot zu einer Beeinträchtigung der Funktionsflächen kommen. Insbesondere dann, wenn diese Funktionsflächen als Dichtungsflächen oder Führungsflächen ausgebildet sind, kann sich darauf angesammeltes bzw. abgelagertes, erstarrtes Lot zu einer Beeinträchtigung der Dichtungsfunktion oder Problemen bei der Montage führen. Ferner können derartige Lotflecken an Funktionsflächen dazu führen, dass ein mit dem Verbindungselement zu verbindendes Teil wie ein Rohr oder Schlauch oder Aggregat nur schwer oder gar nicht an dem Verbindungselement montiert werden kann.

Aus der DE-A-10 2007 051 109 ist ein Verbindungselement bekannt, das alle Merkmale des Oberbegriffs des Anspruchs 1 aufweist.

Vor diesem Hintergrund ist es eine Aufgabe der Erfindung, ein verbessertes Verbindungselement für eine Leitungsanordnung anzugeben.

Diese Aufgabe wird bei dem eingangs genannten Verbindungselement dadurch gelöst, dass zwischen der Funktionsfläche und der Lötverbindung eine Ausnehmung vorgesehen ist, in der überschüssiges Lot der Lötverbindung auffangbar ist.

Die Ausnehmung dient dazu, aufgrund der Kapillarwirkung ungelenkt fließendes Lot bzw. Lötmittel gegenüber einem Fließen auf die Funktionsfläche zu stoppen. Die Ausnehmung kann dabei als Reservoir für überschüssiges Lot dienen. Die Ausnehmung bildet ferner vorzugsweise eine Abrisskante zumindest am Übergang von der Ausnehmung zu der Funktionsfläche, so dass das aufgrund der Kapillarwirkung fließende Lot diese Abrisskante nur schwer oder gar nicht überwinden kann.

Folglich kann verhindert werden, dass das ungelenkt fließende Lot auf die Funktionsoberfläche gelangt. Demzufolge kann die Funktionsfläche die für sie vorgesehene Funktion, wie beispielsweise eine Dichtungsfunktion oder eine Passungsfunktion, in optimaler Weise erfüllen.

Das Verbindungselement kann ein einzelnes Element mit einem einzelnen Verbindungsabschnitt sein, kann jedoch auch Teil eines komplexeren Verbindungselementes mit mehreren Verbindungsabschnitten sein. Das Verbindungselement kann als Muffe oder als Nippel ausgebildet sein. Die Funktionsfläche kann zur Verbindung mit einem Schlauch oder einem Rohr oder zur Montage in einer Aggregatebohrung ausgelegt sein.

Die Aufgabe wird somit vollkommen gelöst.

Von besonderem Vorzug ist es, wenn die Ausnehmung an dem Grundkörper ausgebildet ist.

Da der Grundkörper in der Regel ohnehin einer umformenden Bearbeitung unterzogen wird, ist das Ausbilden einer derartigen Ausnehmung an dem Grundkörper in der Regel ohne bzw. ohne wesentlichen zusätzlichen Aufwand realisierbar.

Dabei ist es von besonderem Vorzug, wenn die Ausnehmung als Nut, insbesondere als Umfangsnut in dem Grundkörper ausgebildet ist.

Der Grundkörper ist dabei vorzugsweise rotationssymmetrisch ausgebildet und kann beispielsweise durch Drehen hergestellt sein. Bei einem derartigen Drehprozess, bei dem beispielsweise die Funktionsfläche hergestellt wird, kann die Nut ohne großen Aufwand mit eingedreht werden.

Von besonderem Vorteil ist es ferner, wenn das Anschlusselement und die Nut sich in einer axialen Richtung zumindest teilweise überschneiden.

Hierdurch kann zum einen gewährleistet werden, dass das ungelenkt fließende Lot über einen bevorzugterweise abgerundeten Übergang in die Nut fließen kann. Das Anschlusselement kann dabei in dem gegenüber der Nut axial überstehenden Teil mit einer Abrisskante versehen sein, so dass vermieden wird, dass das Lot an dem Anschlusselement entlang fließt.

Gemäß einer weiteren insgesamt bevorzugten Ausführungsform liegt das Anschlusselement an einer Anschlagfläche des Grundkörpers an.

Hierdurch kann eine vordefinierte Relativposition zwischen dem Anschlussteil und dem Grundkörper eingerichtet werden, bevor das Lot aufgebracht wird.

Die Anschlagfläche ist vorzugsweise radial in Bezug auf eine axiale Verbindungsrichtung des Verbindungselementes ausgerichtet. Das beim Herstellen der Lötverbindung fließende Lot kann folglich in den Bereich zwischen dem Anschlusselement und der Anschlagfläche eindringen. Dies ist in der Regel dann unproblematisch, wenn benachbart zu der Anschlagfläche keine Funktionsfläche ausgebildet ist. Falls dies doch der Fall ist, kann beispielsweise eine Ausnehmung benachbart zu der Anschlagfläche vorgesehen werden.

Bei einer Ausführungsform kann zwischen der Anschlagfläche und der Ausnehmung ein Zwischenabschnitt angeordnet sein. Dies kann insbesondere dann der Fall sein, wenn die Anschlagfläche und die Ausnehmung an einem Innenumfang einer Durchgangsöffnung des Grundkörpers ausgebildet sein.

Insgesamt ist es ferner bevorzugt, wenn das Anschlusselement als Rohrabschnitt ausgebildet ist, dessen Innen- oder Außenumfang eine Anschlussfläche bildet, wobei die Lötverbindung zwischen der Anschlussfläche und einer Lötfläche des Grundkörpers ausgebildet ist.

Gemäß einer weiteren Ausführungsform ist das Anschlusselement als Halter mit einer Anschlussfläche ausgebildet, wobei die Lötverbindung zwischen der Anschlussfläche und einer Lötfläche des Grundkörpers ausgebildet ist.

Ein solcher Halter ist in der Regel am Außenumfang des Verbindungselementes vorgesehen. An dem Verbindungselement können auch zwei oder mehrere Anschlusselemente mittels jeweiliger Lötverbindungen festgelegt sein, beispielsweise ein Halter und wenigstens ein Rohrabschnitt.

Generell kann die Ausnehmung zum Stoppen von ungelenkt fließendem Lot ausschließlich an dem Grundkörper ausgebildet sein.

Gemäß einer weiteren Ausführungsform kann eine solche Ausnehmung auch zwischen dem Anschlusselement und einer Stufe des Grundkörpers ausgebildet sein.

Durch die Stufen wird eine Ausnehmung gebildet, in die insbesondere Lot aus einem Bereich zwischen dem Anschlusselement und einer Anschlagfläche des Grundkörpers fließen kann.

Die Funktionsfläche kann insbesondere eine Dichtungsfläche oder eine Passungsfläche oder eine Führungsfläche sein.

Die Funktionsfläche ist vorzugsweise eine Fläche zum Befestigen eines Rohr- oder Schlauchleitungsabschnittes bzw. in einer Aggregatebohrung.

Generell besteht bei derartigen Leitungsanordnungen eine Tendenz, Ringstückanbindungen durch O-Ringanbindungen zu ersetzen. Hierbei werden O-Ringe im Bereich von Funktionsflächen integriert. Hierbei bildet die Funktionsfläche mit dem O-Ring bspw. einen O-Ringnippel. Ein Halter kann beispielsweise über einen solchen O-Ringnippel von einer axialen Seite aus auf das Verbindungselement aufgeschoben werden. Andererseits ist es bei derartigen Verbindungselementen auch denkbar, dass an dem anderen axialen Ende ein Rohr anzubringen ist. In diesem Fall kann ein Halter auch von der Rohrseite aus aufgebracht werden. Im ersteren Fall ist es bevorzugt, eine Umfangsnut zwischen der Funktionsfläche und der Lötfläche des Grundkörpers vorzusehen. Im zweiten Fall ist es bevorzugt, an dem Grundkörper benachbart zu einem solchen Halter eine Stufe auszubilden, so dass die Ausnehmung zwischen dem Anschlusselement und dem Grundkörper eingerichtet wird.

Ferner ist es möglich, eine Ausnehmung als Innennut in einer Durchgangsöffnung des Verbindungselementes vorzusehen. Dies gilt insbesondere dann, wenn in die Durchgangsöffnung ein Rohrabschnitt eingelötet wird. In diesem Fall kann zwischen einer Anschlagfläche für den Rohrabschnitt und der Innennut ein Zwischenabschnitt vorgesehen sein. Eine dem Zwischenabschnitt abgewandte Seite der Ringnut kann in diesem Fall als Funktionsfläche ausgebildet sein, da in diesem Bereich kein Lot fließen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Leitungsanordnung mit einem Ausführungsbeispiel einer erfindungsgemäßen Verbindungselementes;
- Fig. 2: eine schematische Längsschnittansicht durch eine weitere Ausführungsform eines erfindungsgemäßen Verbindungselementes; und
- Fig. 3: eine Längsschnittansicht durch eine schematische Längsschnittansicht durch eine weitere Ausführungsform eines erfindungsgemäßen Verbindungselementes.

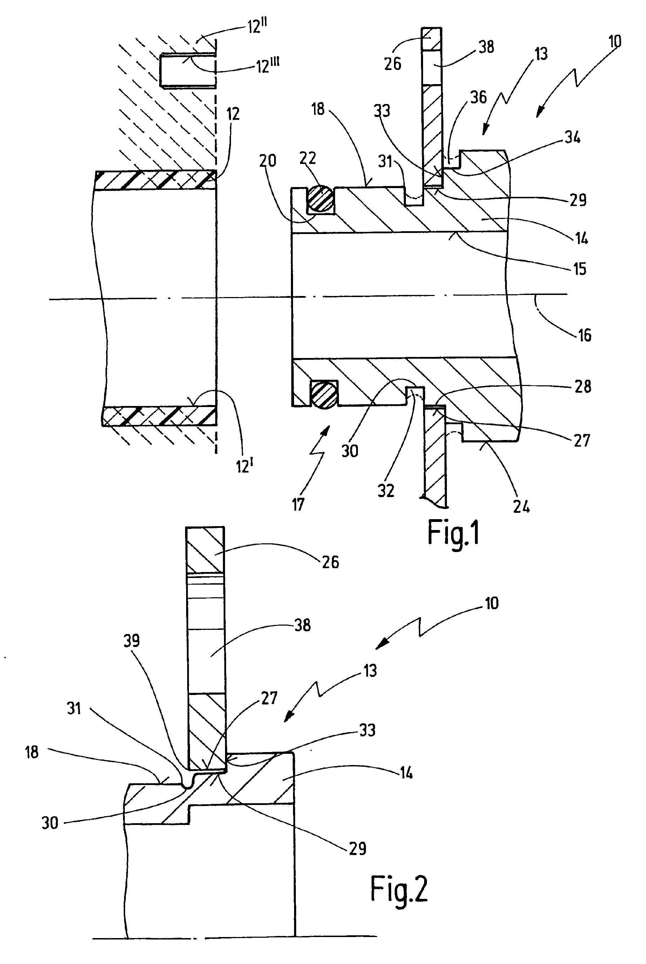

In Fig. 1 ist eine Leitungsanordnung generell mit 10 bezeichnet. Die Leitungsanordnung 10 beinhaltet beispielsweise eine Leitung 12 wie einen Rohr- oder Schlauchabschnitt. Alternativ kann die Leitungsanordnung 10 auch eine Aggregatebohrung 12' in einem schematisch dargestellten Aggregat 12" aufweisen (in Fig. 1 gestrichelt dargestellt). Ferner weist die Leitungsanordnung ein Verbindungselement 13 auf. Das Verbindungselement 13 beinhaltet einen Grundkörper 14, der eine Durchgangsöffnung 15 aufweist. Die Durchgangsöffnung 15 ist in einer Längsachse 16 ausgerichtet, die parallel zu einer Verbindungsachse liegt.

An dem Grundkörper 14 ist ein erster Verbindungsabschnitt 17 ausgebildet, der eine erste Funktionsfläche 18 in Form eines Außenumfangsabschnittes beinhaltet. Die Funktionsfläche 18 ist vorzugsweise konzentrisch zu der Längsachse 16.

In der Funktionsfläche 18 ist eine Umfangsnut 20 zur Aufnahme eines O-Rings 22 ausgebildet.

Die Leitung 12 kann zur Herstellung einer dichtenden Verbindung zwischen der Leitung 12 und dem Verbindungselement 13 in axialer Richtung auf die Funktionsfläche 18 aufgeschoben werden. Alternativ kann der erste Verbindungsabschnitt 17 in die Bohrung 12' axial eingeschoben werden.

Der Grundkörper 14 kann eine zweite Funktionsfläche 24 aufweisen, auf die nachstehend noch eingegangen wird.

An dem Grundkörper 14 ist ein Halteelement 26 in Form eines Blechteils festgelegt. Das Halteelement 26 weist eine kreisförmige Ausnehmung mit einer inneren Anschlussfläche 27 auf, deren Innendurchmesser größer ist als der Außendurchmesser der Funktionsfläche 18.

An dem Grundkörper 14 ist ferner eine Lötfläche 29 ausgebildet, auf die die Anschlussfläche 27 aufgeschoben werden kann. Die Lötfläche 29 ist ebenfalls als konzentrische Ringfläche ausgebildet und weist vorzugsweise einen etwas größeren Durchmesser als die Funktionsfläche 24 auf.

Zum Festlegen des Halteelementes 26 an dem Grundkörper 14 wird das Halteelement 26 zunächst in axialer Richtung über die Funktionsfläche 18 auf die Lötfläche 29 aufgeschoben. Anschließend wird Lötmittel bzw. Lot in den Bereich zwischen der Anschlussfläche 27 und der Lötfläche 29 eingebracht, vorzugsweise von der der Funktionsfläche 18 gegenüberliegenden Seite des Halteelementes 26 aus.

Zwischen der Lötfläche 29 und der Funktionsfläche 18 ist eine Auffangnut 30 vorgesehen, deren Bodendurchmesser kleiner ist als der Außendurchmesser der Funktionsfläche 18. Die Auffangnut 30 weist an ihrem der Funktionsfläche 18 zuweisenden Ende eine Abrisskante 31 auf.

Sofern während des Herstellens einer Lötverbindung 28 flüssiges Lot aus dem Bereich zwischen der Anschlussfläche 27 und der Lötfläche 29 fließt, so gelangt dieses in die Auffangnut 30 und wird dort aufgefangen. Insbesondere wenn die Abrisskante 31 vorgesehen ist, wird ferner verhindert, dass das Lot aufgrund von Kapillarwirkungen auf die Funktionsfläche 18 übergreift.

Das überschüssige Lot sammelt sich folglich in der Auffangnut 30, wie es in Fig. 1 bei 32 gezeigt ist.

Das Halteelement 26 wird zur Herstellung einer vordefinierten Lage in Bezug auf den Grundkörper 14 auf die Lötfläche 29 aufgeschoben, bis das Halteelement 26 an einer Anschlagfläche 33 anliegt.

Sofern auf der der Funktionsfläche 18 gegenüberliegenden Seite des Halteelementes 26 ebenfalls eine Funktionsfläche ausgebildet ist, wie es in Fig. 1 bei 24 gezeigt ist, kann zum Verhindern des Fließens von Lot auf die weitere Funktionsfläche 24 in dem dem Halteelement 26 benachbarten Bereich des Grundkörpers 14 eine Auffangsstufe 34 ausgebildet werden. Bei dieser Ausführungsform wird eine Ausnehmung zwischen dem Grundkörper und dem Halteelement 26 eingerichtet, in die überschüssiges Lot fließen kann, wie es in Fig. 1 schematisch bei 36 angedeutet ist.

Die Stufe 34 weist an ihrem Übergang zu der Funktionsfläche 24 ebenfalls vorzugsweise eine Abrisskante auf, was in Fig. 1 jedoch nicht näher dargestellt ist.

Sofern auf der der ersten Funktionsfläche 18 gegenüberliegenden Seite des Halteelementes 26 keine Funktionsfläche vorgesehen ist, kann auf eine derartige Auffangstufe 34 auch verzichtet werden.

Sofern jedoch der Grundkörper eine Funktionsfläche 24 aufweist, ist es bevorzugt, die Auffangstufe 34 vorzusehen. In diesem Fall kann auf die Auffangnut 30 gegebenenfalls verzichtet werden, wenn die Fläche 18 nicht als Funktionsfläche in Form einer Dichtungs- oder Passungsfläche ausgebildet ist. In letzterem Fall kann das Lot auch von der Seite der Fläche 18 aus aufgetragen werden.

Das Halteelement 26 kann eine Bohrung 38 aufweisen, die exzentrisch zu der Längsachse 16 angeordnet ist. Mittels der Bohrung 38 kann das Halteelement 26 an geeigneter Stelle festgelegt werden, beispielsweise mittels einer Schraube in einer Gewindebohrung 12"' des Aggregats 12".

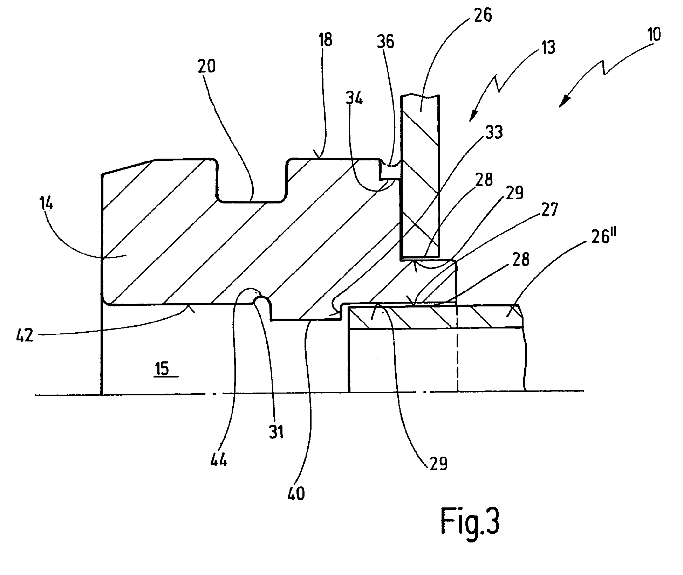

In den nachfolgenden Fig. 2 und 3 werden weitere Ausführungsformen von Leitungsanordnungen 10 gezeigt, die hinsichtlich Aufbau und Funktionsweise generell der in Bezug auf Fig. 1 beschriebenen Leitungsanordnung entsprechen. Gleiche Elemente sind daher mit gleichen Bezugsziffern bezeichnet. Im Folgenden werden im Wesentlichen die Unterschiede erläutert.

Fig. 2 zeigt eine Ausführungsform, bei der der Grundkörper 14 die erste Funktionsfläche 18 aufweist, jedoch auf der dem Halteelement 26 gegenüberliegenden Seite keine Funktionsfläche aufweist. Es ist zu erkennen, dass das Halteelement 26 vorzugsweise eine Bohrung 38 zum Anbringen des Grundkörpers 14 an einem anderen Bauteil beinhaltet.

Ferner ist in Fig. 2 zu erkennen, dass das Halteelement 26 in axialer Richtung sich zumindest teilweise mit der Nut 30 überschneidet. Mit anderen Worten weist die Lötfläche 29 eine kürzere axiale Länge auf als die Anschlussfläche 27. Demzufolge steht das Halteelement gegenüber der Lötfläche 29 vor und ragt in axialer Richtung über die Nut 30.

Der Übergang zwischen der Lötfläche 29 und der Nut 30 ist vorzugsweise abgerundet ausgebildet, um den Fluss von Lot in die Nut 30 zu unterstützen. Auf der der Funktionsfläche 18 zugewandten Seite ist die Nut mit einer Abrisskante 31 ausgebildet. Ferner ist es bevorzugt, wenn das Halteelement 26 an dem axial vorstehenden Abschnitt ebenfalls eine Abrisskante aufweist. Hierdurch kann vermieden werden, dass das Lot in radialer Richtung an dem Halteelement 26 hochsteigt.

Folglich kann ein Leitungselement 12 in axialer Richtung bis gegen das Halteelement 26 auf die Funktionsfläche 18 aufgeschoben werden.

Bei der Ausführungsform der Fig. 3 ist zwischen einer Lötfläche 29 zum Festlegen eines Anschlusselementes in Form eines Halteelementes 26 und einer Funktionsfläche 18 eine Stufe 34 an dem Außenumfang des Grundkörpers 14 ausgebildet. Hierbei kann die Zufuhr von Lot von der der Stufe 34 gegenüberliegenden Seite des Halteelementes 26 aus erfolgen.

Bei dem Verbindungselement 13 der Fig. 3 ist ferner ein Anschlusselement 26' in Form eines Rohrabschnittes mit einem Innenumfangsabschnitt der Durchgangsöffnung 15 verbunden. Der Innenumfangsabschnitt bildet bei dieser Ausführungsform eine Lötfläche 29. Ein Außenumfangsabschnitt des Rohrelementes bildet eine Anschlussfläche 27. Zwischen diesen Flächen ist eine Lötverbindung 28 eingerichtet.

An dem Innenumfang der Durchgangsöffnung 15 ist ferner eine Funktionsfläche 42 vorgesehen. Um zu vermeiden, dass Lot der Lötverbindung 28 auf die Funktionsfläche 42 gelangt, ist zwischen der Lötverbindung 28 und der Funktionsfläche 42 eine Auffangnut 44 in Form einer Innenumfangsnut an der Durchgangsöffnung 15 ausgebildet. Diese kann wiederum eine Abrisskante 31 auf ihrer der Funktionsfläche 42 zugewandten Seite aufweisen.

Ferner ist in Fig. 3 gezeigt, dass zwischen der Lötverbindung 28 bzw. einer Anschlagfläche 33 am Innenumfang des Verbindungselementes 13 und der Aufnahmenut 44 ein axialer Zwischenabschnitt 40 vorgesehen sein kann, der nicht als Funktionsfläche ausgebildet ist. Über diesem Zwischenabschnitt kann überschüssiges Lot ggf. während des Herstellens der Lötverbindung 28 in die Auffangnut 44 fließen.

## Patentansprüche

1. Verbindungselement (13) für eine Leitungsanordnung (10), mit einem Grundkörper (14), der wenigstens einen Verbindungsabschnitt (17) aufweist, wobei der Verbindungsabschnitt (17) eine Funktionsfläche (18; 24; 42) aufweist und wobei ein Anschlusselement (26; 26') mittels einer Lötverbindung (28) mit dem Grundkörper (14) verbindbar ist,
**dadurch gekennzeichnet, dass**
zwischen der Funktionsfläche (18; 24; 42) und der Lötverbindung (28) eine Ausnehmung (30; 34; 44) vorgesehen ist, in der überschüssiges Lot (32; 36) der Lötverbindung (28) auffangbar ist.

2. Verbindungselement nach Anspruch 1, **dadurch gekennzeichnet, dass** die Ausnehmung (30; 34; 44) an dem Grundkörper (14) ausgebildet ist.

3. Verbindungselement nach Anspruch 2, **dadurch gekennzeichnet, dass** die Ausnehmung (30; 34; 44) als Nut in dem Grundkörper (14) ausgebildet ist.

4. Verbindungselement nach Anspruch 3, **dadurch gekennzeichnet, dass** das Anschlusselement (26) und die Nut (30) sich in einer axialen Richtung zumindest teilweise überschneiden.

5. Verbindungselement nach einem der Ansprüche 1 - 4, **dadurch gekennzeichnet, dass** das Anschlusselement (26; 26') an einer Anschlagfläche (33) des Grundkörpers (14) anliegt.

6. Verbindungselement nach Anspruch 5, **dadurch gekennzeichnet, dass** zwischen der Anschlagfläche (33) und der Ausnehmung (44) ein Zwischenabschnitt (40) angeordnet ist.

7. Verbindungselement nach einem der Ansprüche 1 - 6 **dadurch gekennzeichnet, dass** das Anschlusselement (26') als Rohrabschnitt ausgebildet ist, dessen Innen- oder Außenumfang eine Anschlussfläche (27) bildet, wobei die Lötverbindung (28) zwischen der Anschlussfläche (27) und einer Lötfläche (29) des Grundkörpers (14) ausgebildet ist.

8. Verbindungselement nach einem der Ansprüche 1 - 4, **dadurch gekennzeichnet, dass** das Anschlusselement (26) als Halter mit einer Anschlussfläche (27) ausgebildet ist, wobei die Lötverbindung (28) zwischen der Anschlussfläche (27) und einer Lötfläche (29) des Grundkörpers (14) ausgebildet ist.

9. Verbindungselement nach einem der Ansprüche 1 - 7, **dadurch gekennzeichnet, dass** die Ausnehmung (34) zwischen dem Anschlusselement (26) und einer Stufe (34) des Grundkörpers (14) ausgebildet ist.

10. Verbindungselement nach einem der Ansprüche 1 - 8, **dadurch gekennzeichnet, dass** die Funktionsfläche (18; 24; 42) eine Dichtfläche oder eine Passfläche oder eine Führungsfläche ist.

## Claims

1. Connecting element (13) for a line arrangement (10), having a main body (14) which has at least one connecting section (17), wherein the connecting section (17) has a functional surface (18; 24; 42) and wherein a connection element (26; 26') is connectable to the main body (14) by means of a soldered connection (28), **characterized in that**
between the functional surface (18; 24; 42) and the soldered connection (28) there is provided a recess (30; 34; 44) in which excess solder (32; 36) from the soldered connection (28) is collectable.

2. Connecting element according to Claim 1, **characterized in that** the recess (30; 34; 44) is formed on the main body (14).

3. Connecting element according to Claim 2, **characterized in that** the recess (30; 34; 44) is formed as a groove in the main body (14).

4. Connecting element according to Claim 3, **characterized in that** the connection element (26) and the groove (30) overlap at least partially in an axial direction.

5. Connecting element according to one of Claims 1-4, **characterized in that** the connection element (26; 26') bears against a stop surface (33) of the main body (14).

6. Connecting element according to Claim 5, **characterized in that** between the stop surface (33) and the recess (44) there is arranged an intermediate section (40).

7. Connecting element according to one of Claims 1-6, **characterized in that** the connection element (26') is in the form of a tubular section, the inner or outer circumference of which forms a connection surface (27), wherein the soldered connection (28) is formed between the connection surface (27) and a soldering surface (29) of the main body (14).

8. Connecting element according to one of Claims 1-4, **characterized in that** the connection element (26) is in the form of a holder having a connection surface (27), wherein the soldered connection (28) is formed between the connection surface (27) and a soldering surface (29) of the main body (14).

9. Connecting element according to one of Claims 1-7, **characterized in that** the recess (34) is formed between the connection element (26) and a step (34) of the main body (14).

10. Connecting element according to one of Claims 1-8, **characterized in that** the functional surface (18; 24; 42) is a sealing surface or a mating surface or a guide surface.

## Revendications

1. Elément de liaison (13) pour un agencement de conduite (10), comprenant un corps de base (14), qui présente au moins une portion de liaison (17), la portion de liaison (17) présentant une surface fonctionnelle (18 ; 24 ; 42) et un élément de raccordement (26 ; 26') pouvant être connecté au corps de base (14) au moyen d'une liaison par brasage (28),
**caractérisé en ce**
**qu'**un évidement (30 ; 34 ; 44) est prévu entre la surface fonctionnelle (18 ; 24 ; 42) et la liaison par brasage (28), la brasure en excès (32 ; 36) de la liaison par brasage (28) pouvant être récupérée dans ledit évidement.

2. Elément de liaison selon la revendication 1, **caractérisé en ce que** l'évidement (30 ; 34 ; 44) est réalisé sur le corps de base (14).

3. Elément de liaison selon la revendication 2, **caractérisé en ce que** l'évidement (30 ; 34 ; 44) est réalisé sous forme de rainure dans le corps de base (14).

4. Elément de liaison selon la revendication 3, **caractérisé en ce que** l'élément de raccordement (26) et la rainure (30) se coupent au moins en partie dans une direction axiale.

5. Elément de liaison selon l'une quelconque des revendications 1 à 4, **caractérisé en ce que** l'élément de raccordement (26 ; 26') s'applique contre une surface de butée (33) du corps de base (14).

6. Elément de liaison selon la revendication 5, **caractérisé en ce qu'**entre la surface de butée (33) et l'évidement (44) est disposée une portion intermédiaire (40).

7. Elément de liaison selon l'une quelconque des revendications 1 à 6, **caractérisé en ce que** l'élément de raccordement (26') est réalisé sous forme de portion tubulaire dont la périphérie interne ou externe forme une surface de raccordement (27), la liaison par brasage (28) étant réalisée entre la surface de raccordement (27) et une surface de brasage (29) du corps de base (14).

8. Elément de liaison selon l'une quelconque des revendications 1 à 4, **caractérisé en ce que** l'élément de raccordement (26) est réalisé sous forme de support avec une surface de raccordement (27), la liaison par brasage (28) étant réalisée entre la surface de raccordement (27) et une surface de brasage (29) du corps de base (14).

9. Elément de liaison selon l'une quelconque des revendications 1 à 7, **caractérisé en ce que** l'évidement (34) est réalisé entre l'élément de raccordement (26) et un étage (34) du corps de base (14).

10. Elément de liaison selon l'une quelconque des revendications 1 à 8, **caractérisé en ce que** la surface fonctionnelle (18 ; 24 ; 42) est une surface d'étanchéité ou une surface d'ajustement ou une surface de guidage.
